# FASCICULE DE BREVET EUROPEEN

(11) **EP 3 828 880 B1**
(45) Date de publication et mention de la délivrance du brevet: **01.01.2025**
(21) Numéro de dépôt: 20210330.5
(22) Date de dépôt: 27.11.2020
(51) Int. Cl.: G10K 11/178, B60N 2/879

(54) **APPUI-TÊTE À ANNULATION DE BRUIT POUR SIÈGE DE VÉHICULE**
GERÄUSCHDÄMPFENDE KOPFSTÜTZE FÜR EINEN FAHRZEUGSITZ
HEADREST WITH NOISE CANCELLATION FOR VEHICLE SEAT

(30) Priorité: 29.11.2019 FR 1913547
(43) Date de publication de la demande: 02.06.2021
(73) Titulaire: FAURECIA Sièges d'Automobile, 92000 Nanterre (FR)
(72) Inventeur: SOLTNER, Stéphane, 70240 Mailleroncourt Charette (FR); GEORGES, Camille, 78500 Sartrouville (FR); DOUKOPOULOS, Xenofon, 91300 Massy (FR)
(74) Mandataire: Plasseraud IP

(56) Documents cités:
- WO-A1-2017/160594
- WO-A1-2019/166075
- JP-A- 2004 016 711
- US-A- 5 133 017
- US-A1- 2006 285 697
- US-A1- 2016 027 428
- US-A1- 2016 100 250
- US-A1- 2018 190 259
- US-A1- 2019 027 128

## Description

### Domaine technique

La présente divulgation se rapporte à un appui-tête à annulation de bruit pour siège de véhicule, en particulier pour siège de véhicule automobile. La présente divulgation se rapporte plus précisément à un appui-tête à annulation de bruit pour siège, comprenant un ou plusieurs microphones intégrés apte à transmettre un signal vocal.

### Technique antérieure

Il est connu de munir un appui-tête à annulation de bruit de siège de véhicule automobile, d'un haut-parleur, intégré dans l'appui-tête derrière la tête de l'utilisateur. Il est ainsi possible d'émettre un son au plus proche des oreilles de l'occupant du siège afin d'annuler le bruit du moteur et le bruit de roulement.

Cependant, l'annulation de bruit peut n'être que partielle. Il existe donc un besoin d'améliorer l'annulation de bruit.

US2019027128A1 concerne un dispositif de réduction de bruit comportant une pluralité de microphones de bruit, un contrôleur de bruit et un haut-parleur de commande.

JP2004016711A concerne un appui-tête avec haut-parleurs intégrés pour transmettre en toute sécurité les informations nécessaires à un utilisateur dans un environnement bruyant dans une cabine à un volume inaudible pour les autres passagers.

WO2017160594A1 concerne un appuie-tête d'un siège comprenant une enveloppe destinée à renfermer un ou plusieurs transducteurs acoustiques. Résumé

L'invention vient améliorer la situation.

À cette fin, il est décrit un appui-tête à annulation de bruit pour siège de véhicule selon la revendication 1, comportant une partie centrale et deux parties latérales s'étendant de part et d'autre de la partie centrale, l'appui tête comportant au moins un haut-parleur orienté vers un espace destiné à recevoir la tête d'un utilisateur,
l'appui tête comportant en outre un microphone orienté vers ledit espace, dans lequel
   - soit l'appui-tête comporte en outre une interface avec un module de lecture de sources audio externe à l'appui-tête, apte à émettre un signal audio vers le haut-parleur,
   - soit l'appui-tête comporte en outre un module de lecture de sources audio interne à l'appui-tête, apte à émettre un signal audio vers le haut-parleur, et
dans lequel l'appui-tête comporte en outre un capteur de bruits orienté vers l'extérieur dudit espace,
l'appui-tête comportant en outre un circuit de traitement de signal configuré pour :
   - recevoir un signal de bruit depuis ledit capteur, et déterminer une fonction de correction de bruit en tenant compte du signal de bruit,
   - recevoir un signal d'erreur depuis ledit microphone, et mettre à jour la fonction de correction de bruit, en tenant compte du signal d'erreur,
   - générer un signal de correction de bruit, en appliquant la fonction de correction de bruit au signal de bruit,
   - générer un signal de commande à destination du haut-parleur, en additionnant le signal de correction de bruit et le signal audio.

Ledit signal d'erreur correspond à un bruit résiduel dans ledit espace. Ledit bruit résiduel peut résulter d'une erreur de correction de bruit.

Grâce à ces caractéristiques, un système d'annulation de bruit comportant le circuit de traitement du signal, le microphone, les capteurs et le haut-parleur est un système autonome compris dans l'appui-tête. Ainsi, il est facile de l'installer dans un véhicule préexistant.

Grâce à ces caractéristiques, la réduction de bruit est améliorée significativement. Notamment, un tel appui-tête permet de réduire le bruit de plus de 10dB supplémentaires par rapport à une simple isolation phonique de 20dB obtenue traditionnellement, par exemple sur la plage de basses fréquences suivante : [100 - 400Hz] correspondant au bruit moteur du véhicule et au bruit de roulement du véhicule.

La mise à jour de la fonction de correction de bruit peut être réalisée sous la forme d'une boucle de rétroaction.

Selon des options avantageuses, un tel appui-tête peut comporter en outre une ou plusieurs des caractéristiques additionnelles décrites ci-dessous.

Dans un mode de réalisation, ladite interface peut comporter des moyens de transmissions de signal filaires, tel par exemple un câble, ou non filaires, tels par exemple un émetteur/récepteur d'ondes, par exemple de type Bluetooth.

Dans un mode de réalisation, l'appui-tête comporte en outre un module vocal pour la téléphonie, apte à recevoir un signal vocal depuis le microphone.

Ainsi, le même microphone permet, outre l'envoi d'un signal vocal au module vocal pour la téléphonie, la captation d'un signal d'erreur et sa transmission au circuit de traitement du signal.

Grâce à l'une ou l'autre de ces caractéristiques, une zone sonore personnelle peut être définie pour un utilisateur de l'appui-tête.

L'utilisateur peut écouter son propre contenu audio personnel dans ladite zone sonore personnelle. Par exemple, le module de lecture de sources audio peut être un autoradio du véhicule, un lecteur de disques, tels des cédéroms ou des cartes mémoire de type digital sécurisé, appelé en anglais «Secure Digital SD », ou encore un téléphone intelligent appelé en anglais « smartphone ».

Préférentiellement, le module vocal pour la téléphonie est en outre apte à transmettre au haut-parleur un signal vocal externe reçu d'un interlocuteur de l'utilisateur, de sorte que l'utilisateur peut entendre la voix de son interlocuteur à l'intérieur de ladite zone sonore personnelle.

L'utilisateur peut parler dans ladite zone sonore personnelle de sorte à émettre ledit signal vocal vers ledit microphone.

Préférentiellement, le module vocal pour la téléphonie est en outre apte à transmettre au tableau de bord du véhicule ou au smartphone de l'utilisateur des commandes vocales. Dans ce cas, un module de reconnaissance vocale permet de convertir la voix de l'utilisateur en signaux de commande vocale identifiables.

Lorsque plusieurs sièges du même véhicule sont équipés chacun d'un tel appui-tête à annulation de bruit, l'habitacle du véhicule peut ainsi avantageusement être partitionné en plusieurs zones sonores personnelles sonorement étanches entre elles. Ainsi, avantageusement, chaque utilisateur peut téléphoner ou écouter des contenus audio sans gêner ni être gêné par les autres utilisateurs.

Dans un mode de réalisation, la fonction de correction de bruit est une fonction du signal de bruit en opposition de phase.

Préférentiellement, la fonction de correction de bruit est une fonction du signal de bruit en opposition de phase sur une plage de fréquences comprise dans une plage sélectionnée dans la liste consistant en : [0 - 800Hz], [0 - 400Hz], [100 - 400Hz], [0 - 250Hz], ou [0 - 200Hz].

Dans un mode de réalisation, le microphone est agencé dans une des deux parties latérales.

Grâce à ces caractéristiques, le microphone est isolé phoniquement dans la zone sonore personnelle. Ainsi, on évite des potentiels effets de réverbération. En outre, le microphone peut ainsi capter le bruit résiduel à proximité des oreilles de l'utilisateur, donc à l'endroit où le bruit résiduel effectif est le plus gênant.

Dans un mode de réalisation, le microphone est agencé dans une partie inférieure de ladite une des deux parties latérales.

Grâce à ces caractéristiques, le microphone est à proximité de la bouche de l'utilisateur, afin de capter sa voix.

Dans un mode de réalisation, le microphone est agencé à une extrémité distale de ladite une des deux parties latérales, de sorte à être proche à la fois de la bouche et de l'oreille de l'utilisateur.

Grâce à l'une ou l'autre de ces caractéristiques, le microphone peut être apte à la fois à capter la parole de l'utilisateur et à capter le bruit résiduel proche de l'oreille de l'utilisateur.

Dans un mode de réalisation, le microphone est un premier microphone, et un deuxième microphone est agencé dans l'autre des deux parties latérales.

Dans un mode de réalisation, le deuxième microphone est agencé de façon symétrique au premier microphone.

Dans un mode de réalisation, le haut-parleur est agencé dans une des deux parties latérales.

Dans un mode de réalisation, un deuxième haut-parleur est agencé dans l'autre des deux parties latérales et est également apte à recevoir ledit signal audio et ledit signal de commande.

Dans un mode de réalisation, la partie centrale comportant ledit capteur de bruit, et chacune des deux parties latérales comportant un autre capteur de bruit, ledit signal de bruit étant issus des trois capteurs de bruits.

Par exemple, et non limitativement, le capteur de bruit est un microphone ou un accéléromètre.

Dans un mode de réalisation, chaque capteur de bruit est configuré pour recevoir du bruit et pour émettre un signal partiel de bruit, le signal de bruit étant une fonction des trois signaux partiels.

Dans un mode de réalisation, la fonction des trois signaux partiels est une moyenne pondérée des signaux partiels, la pondération tenant compte d'un emplacement respectif de chaque capteur de bruit.

Dans un mode de réalisation, la partie centrale est une structure d'appui et les deux parties latérales sont des ailes latérales, de sorte à définir une zone d'annulation de bruit entre lesdites ailes latérales, le signal de commande à destination du haut-parleur permettant d'annuler le bruit dans ladite zone à annulation de bruit.

La zone sonore personnelle comporte ainsi la zone interne d'annulation de bruit.

Dans un mode de réalisation, les ailes latérales sont montées mobiles sur la structure d'appui.

Dans un mode de réalisation, les ailes latérales sont montées pivotantes sur la structure d'appui.

Dans un exemple alternatif, les ailes latérales sont montées rétractables, par exemple via un système de glissières, sur la structure d'appui.

Selon un autre aspect, il est décrit un siège de véhicule comprenant une assise, un dossier et un appui-tête tel que décrit ci-avant, dans toutes ses combinaisons, monté sur le dossier.

### Brève description des dessins

D'autres caractéristiques, détails et avantages apparaîtront à la lecture de la description détaillée ci-après, et à l'analyse des dessins annexés, sur lesquels :
[Fig. 1] montre une partie d'un siège de véhicule automobile.
[Fig. 2] montre un exemple d'appui-tête pouvant être mis en œuvre sur le siège de véhicule de la figure 1, appui-tête dont une partie des garnitures ont été retirées.
[Fig. 3] est une vue, selon une perspective opposée, de l'appui-tête de la figure 2.
[Fig. 4] est un schéma montrant deux positions de réglage de l'appui-tête des figures 2 et 3.
[Fig. 5] est un schéma fonctionnel de l'appui-tête des figures 2 et 3, en utilisation.
[Fig. 6] est un schéma d'un circuit de traitement du signal intégré dans l'appui-tête des figures 2 et 3.
[Fig. 7] est un schéma d'une variante du circuit de traitement du signal intégré de la figure 6.
[Fig. 8] est un graphique montrant deux acquisitions comparées du niveau de bruit en dB (en ordonnées) au regard de la fréquence logarithmique (en abscisse), pour un système d'annulation de bruit ordinaire et pour l'appui-tête des figures 2 et 3.

### Description détaillée

Sur les différentes figures, les mêmes références désignent des éléments identiques ou similaires. À fin de concision, seuls les éléments qui sont utiles à la compréhension des modes de réalisation décrits sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontal », « vertical », etc., il est fait référence, sauf précision contraire, à l'orientation des figures ou d'un siège dans sa position normale d'utilisation.

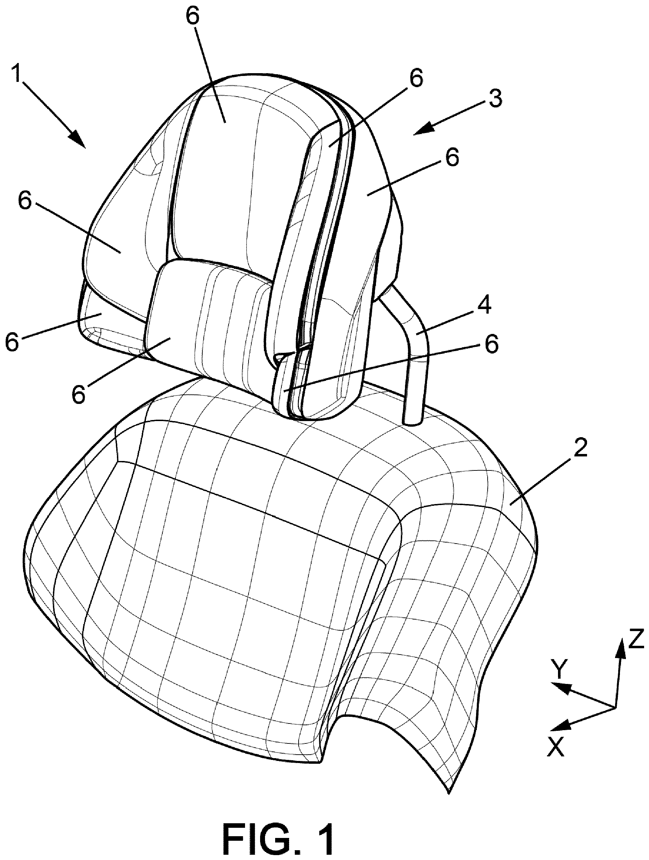

La figure 1 représente de façon schématique un détail d'un siège de véhicule automobile 1.

Dans la suite, la direction longitudinale X s'entend de la direction longitudinale du siège. La direction longitudinale du siège est considérée être la même que la direction longitudinale du véhicule automobile dans lequel le siège est monté. Cette direction longitudinale X correspond à la direction normale d'avancement du véhicule. La direction transversale Y est la direction transversale du siège. La direction transversale du siège correspond ainsi à la direction transversale ou latérale du véhicule automobile. Cette direction transversale correspond à une direction perpendiculaire à la direction normale d'avancement du véhicule. Enfin, la direction verticale Z est une direction verticale du siège, perpendiculaire aux directions longitudinale et transversale.

Le siège 1 comporte une assise (non représentée) avec une armature d'assise, sur laquelle un dossier 2, avec une armature dossier, est monté, généralement pivotant autour d'un axe transversal par un mécanisme d'articulation. L'assise peut être montée sur des profilés mobiles, également appelés coulisses ou profilés mâles, par l'intermédiaire de pieds ou traverses. Chaque profilé mobile fait partie d'une glissière et est associé à un profilé fixe. Le profilé fixe est fixé au plancher d'un véhicule automobile.

Le siège 1 comprend également un appui-tête 3 fixé à l'armature de dossier au moyen de deux tiges 4.

Plus précisément, les tiges 4 relient une armature d'appui-tête 5 à l'armature de dossier. Sur cette armature d'appui-tête est notamment fixée une ou plusieurs garnitures 6 pour améliorer le confort de l'occupant du siège 1 et/ou l'esthétique de l'appui-tête 3.

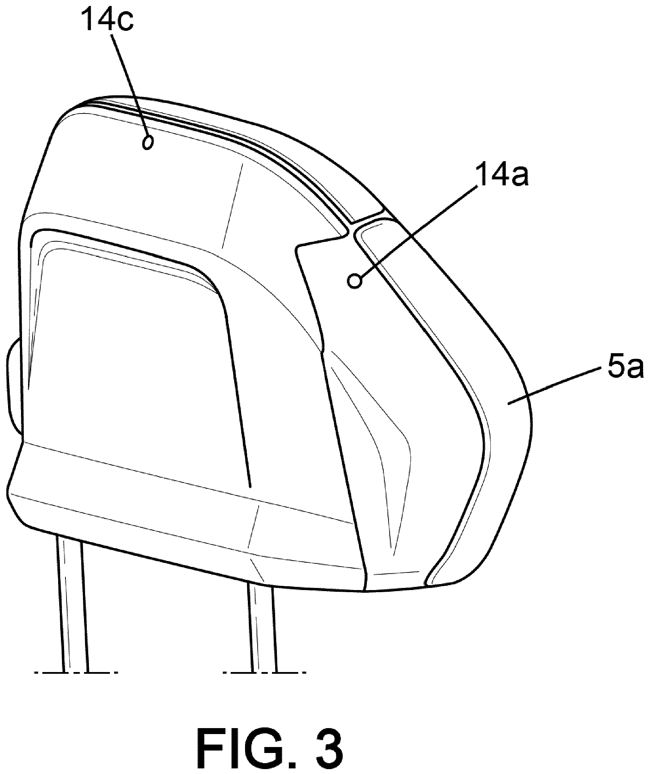

La description suivante fait référence aux figures 1 à 5 décrivant plus précisément l'appui-tête 3.

L'armature d'appui-tête 5 a ici une forme de cuvette, présentant une structure d'appui 5c sensiblement plane, depuis les extrémités latérales de laquelle s'étendent deux ailes latérales 5a, 5b. L'armature d'appui-tête 5 a ainsi une forme adaptée pour englober partiellement la tête de l'occupant du siège 1. Notamment, les ailes latérales 5a, 5b sont ainsi adaptées à être disposées à proximité des oreilles de l'occupant du siège, en étant orientées sensiblement face aux oreilles de l'occupant du siège 1.

La structure d'appui 5c est destinée à recevoir l'arrière de la tête d'un utilisateur 7, de sorte à ce que celui-ci puisse y reposer sa tête.

Les ailes latérales 5a, 5b sont destinées à former autour de la tête de l'utilisateur une barrière physique aux bruits favorisant l'isolation phonique d'une zone interne 8, dite zone interne d'annulation de bruit, au niveau de la cuvette.

Les ailes latérales 5a, 5b sont montées pivotantes selon un axe vertical sur la structure d'appui 5c, entre une position ouverte 9 et une position fermée 10. Dans la position ouverte 9, les ailes latérales 5a, 5b forment entre elles un angle de sorte à former une forme en V dans une vue de haut. Dans la position fermée 10, les ailes latérales 5a, 5b forment avec la structure d'appui 5c une forme en U dans une vue de haut.

Optionnellement, les ailes latérales 5a, 5b peuvent pivoter indépendamment l'une de l'autre.

Ainsi, en utilisation, un utilisateur peut rabattre les ailes latérales 5a, 5b autour de son visage, de sorte à approcher les ailes latérales 5a, 5b de ses oreilles et de sa bouche.

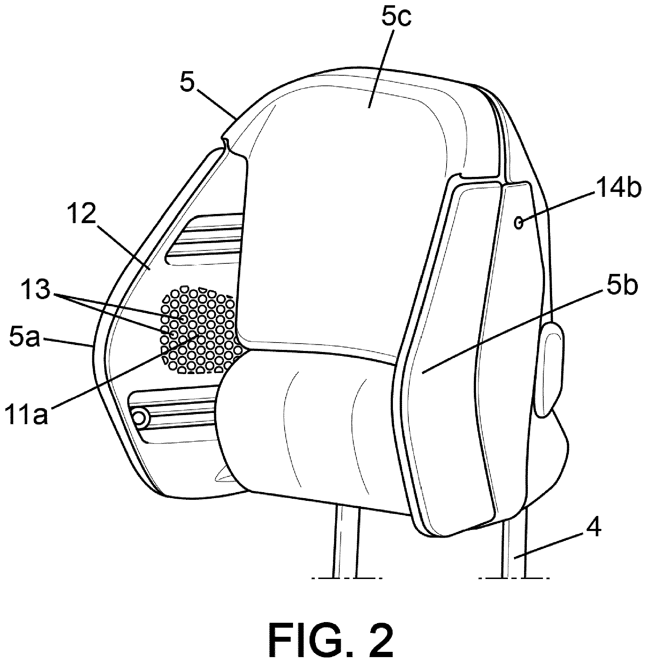

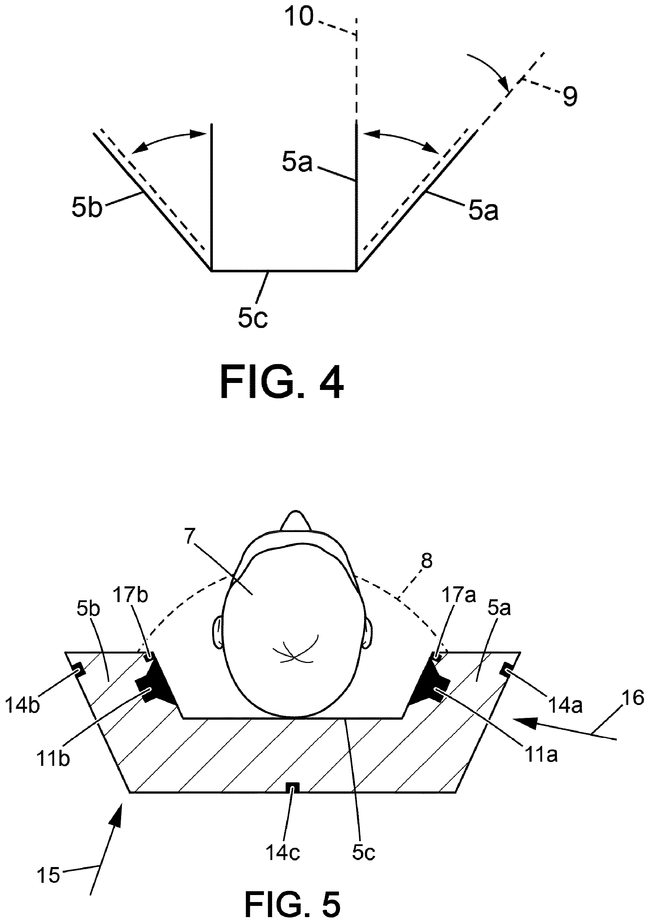

L'appui-tête 3 est également muni de deux haut-parleurs 11a et 11b, plus nettement visibles sur les figures 2 et 5. Chaque haut-parleur 11a, 11b est disposé dans une aile latérale 5a, 5b respective, et tourné vers la zone interne 8.

Pour cela, chaque aile latérale 5a, 5b comporte une cavité apte à recevoir le haut-parleur 11a, 11b. Afin de protéger la membrane du haut-parleur, la cavité est fermée par une cloison 12 percée d'orifices 13 permettant au son de circuler depuis le haut-parleur 11a, 11b jusqu'à la zone interne 8.

Les haut-parleurs 11a, 11b sont par exemple des haut-parleurs du type « full-range », ce type de haut-parleurs étant adapté à émettre de manière satisfaisante dans une large gamme de fréquences. Les haut-parleurs 11a, 11b sont choisis de préférence avec une fréquence seuil basse, de sorte à conserver une bonne performance notamment dans les fréquences inférieures à 250 Hz, notamment dans les fréquences comprises entre 100 Hz et 250 Hz.

Comme on le voit sur les figures 2 à 5, l'appui-tête 3 comporte en outre trois capteurs de bruit 14a, 14b et 14c respectivement disposés sur les ailes latérales 5a, 5b et la structure d'appui 5c, et orientés vers l'extérieur de la zone interne 8, de sorte à pouvoir collectivement capter des bruits 15, 16 provenant de directions différentes dans l'habitacle du véhicule.

Les capteurs de bruit 14a, 14b et 14c sont agencés sur des matériaux amortissants, de sorte à ne pas être perturbés par les vibrations issues des haut-parleurs 11a et 11b.

Comme on le voit sur les figures, l'appui-tête 3 comporte en outre deux microphones 17a et 17b respectivement disposés sur les ailes latérales 5a et 5b, et orientés vers l'intérieur de la zone interne 8, de sorte à pouvoir collectivement capter la voix provenant de la bouche de l'utilisateur 7, et capter un signal d'erreur dû à un bruit résiduel présent dans la zone interne 8.

Les haut-parleurs 11a et 11b, ainsi que les microphones 17a et 17b sont connectés dans l'appui-tête 3 à une interface (non représentée) avec un module vocal de téléphonie. Par exemple, le module vocal de téléphonie est intégré dans le tableau de bord du véhicule ou dans un téléphone. De préférence, l'interface permet de communiquer par ondes Bluetooth (marque déposée) ou ondes radio avec le module vocal de téléphonie.

Ainsi, l'appui-tête 3 n'a pas besoin d'être connecté de manière filaire au tableau de bord du véhicule. Aussi, l'appui-tête 3 présente avantageusement une fonction de téléphonie autonome.

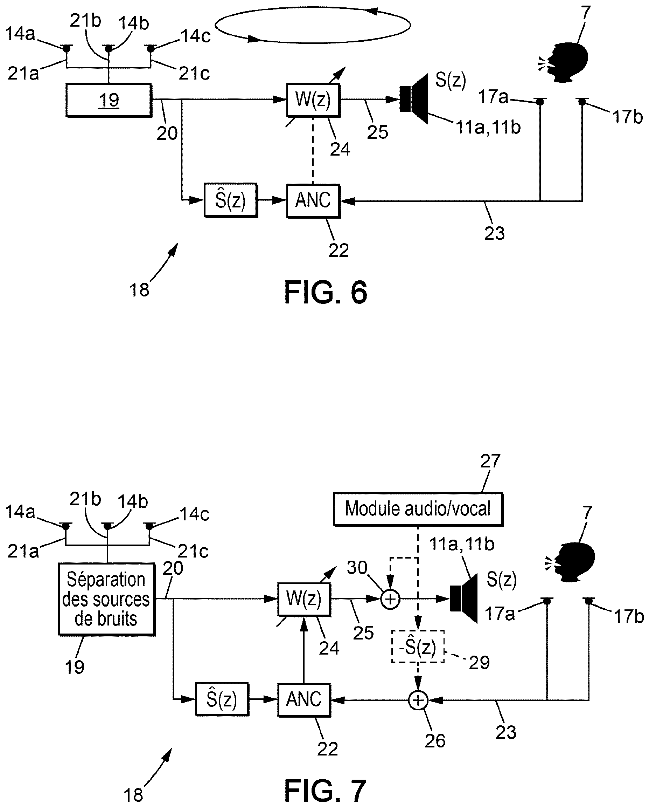

L'appui-tête 3 comporte en outre un circuit de traitement de signal 18 tel que décrit sur la figure 6. Par exemple, le circuit de traitement du signal 18 est disposé à l'intérieur de la structure d'appui 5c, par exemple dans une cavité dédiée.

Le circuit de traitement du signal 18 est électriquement connecté :
- aux haut-parleurs 11a et 11b,
- aux capteurs de bruit 14a, 14b et 14c,
- aux microphones 17a, 17b.

Le circuit de traitement du signal 18 comporte un module de génération de signal de bruit 19 configuré pour calculer un signal de bruit 20 en réponse à des signaux de bruit partiels 21a, 21b, 21c respectifs reçus respectivement de chacun des capteurs de bruit 14a, 14b et 14c.

Plus précisément, le signal de bruit 20 est calculé comme une moyenne pondérée desdits signaux de bruit partiels, la pondération dépendant de l'emplacement de chaque capteur de bruit 14a, 14b et 14c. Notamment, la pondération dépend de l'emplacement effectif des capteurs de bruits 14a et 14b. Aussi, le module de génération de signal de bruit 19 est en outre configuré pour régler la pondération en fonction de la position ouverte 9 ou fermée 10 des ailes latérales 5a et 5b.

Le circuit de traitement du signal 18 comporte un module d'annulation de bruit actif 22, encore appelé en anglais « Active Noise Cancellation ANC », configuré pour :
- recevoir le signal de bruit 20 depuis le module 19, et déterminer une fonction de correction de bruit S(z) en inversant la phase du signal de bruit 20,
- recevoir un signal d'erreur 23 depuis les microphones 17a et 17b, et mettre à jour la fonction de correction de bruit S(z), en tenant compte du signal d'erreur 23, par une boucle de rétroaction.

En sortie du module 19, le signal de bruit 20 est dupliqué par un module perroquet (non représenté).

Le circuit de traitement du signal 18 comporte en outre un filtre adaptatif 24 configuré pour piloter les haut-parleurs 11a et 11b.

Le filtre adaptatif 24 est configuré pour être piloté par la fonction de correction de bruit S(z) depuis le module 22, et pour recevoir en outre le signal de bruit 20 dupliqué depuis le module 19.

Le filtre adaptatif 24 est ainsi apte à appliquer la fonction de correction de bruit S(z) au signal de bruit 20 de sorte à générer un signal de correction de bruit 25.

Le filtre adaptatif 24 est configuré pour générer un signal de commande comportant le signal de correction de bruit 25 à destination des haut-parleurs 11a, 11b, afin de piloter les haut-parleurs 11a, 11b.

Ainsi, les haut-parleurs sont configurés pour émettre des ondes sonores d'annulation de bruit, de sorte à annuler le bruit dans la zone interne 8 afin que l'utilisateur 7 ne soit pas perturbé par du bruit extérieur.

Ainsi, l'appui-tête 3 comporte de façon autonome tous les éléments nécessaires à assurer une fonction d'annulation de bruit autonome.

Un tel circuit de traitement du signal 18 est adapté dans le cas où les microphones 17a et 17b ne sont utilisés que dans leur fonction de capteur de signal d'erreur 23.

La figure 7 représente une variante avantageuse plus complète du circuit de traitement du signal 18 de la figure 6, dans laquelle l'appui-tête 3 est en outre apte à délivrer des contenus audio à l'utilisateur 7, et/ou à être utilisé pour la téléphonie.

Dans cette variante, les haut-parleurs 11a et 11b peuvent être en outre aptes à délivrer un signal audio (par exemple de contenus audio ou la voix d'un interlocuteur).

Le circuit de traitement du signal 18 comporte en outre une interface (lignes pointillées) avec un module audio et vocal 27 comportant un module de lecture de sources audio et un module de téléphonie.

De préférence, l'interface permet de communiquer par ondes Bluetooth ou ondes radio avec le module audio et vocal 27. Le module de lecture source audio est par exemple un autoradio du véhicule.

Le module audio et vocal 27 est apte à délivrer le signal audio, et ladite interface est apte à recevoir le signal audio et à le transmettre à un module additionneur 30.

Le module additionneur 30 est configuré pour additionner le signal de correction de bruit 25 issu du filtre adaptatif 24, et le signal audio issu du module audio et vocal 27, de sorte à ce que le signal de commande résulte de l'addition du signal de correction de bruit 25 et du signal audio.

Dans une utilisation de l'appui-tête en téléphonie, les microphones 17a et 17b peuvent être en outre aptes à capter la voix de l'utilisateur 7. Dans ce cas, un signal vocal est transmis par les microphones 17a et 17b, soit à la place, soit additionnellement au signal de bruit 23.

Afin d'éviter un effet d'écho, le signal vocal en sortie du module audio et vocal 27 est transmis à un filtre annuleur d'écho 29, de sorte à fournir un signal d'annulation d'écho. Un second module additionneur 26 est disposé en amont du module 22. Le second module additionneur 26 est configuré pour additionner le signal d'annulation d'écho et le signal vocal.

Ainsi, les haut-parleurs sont configurés pour émettre des ondes sonores comportant le signal audio et l'annulation de bruit, de sorte à permettre à l'utilisateur 7 d'écouter des contenus audio ou la voix d'un interlocuteur dans la zone interne 8 sans être perturbé par du bruit extérieur.

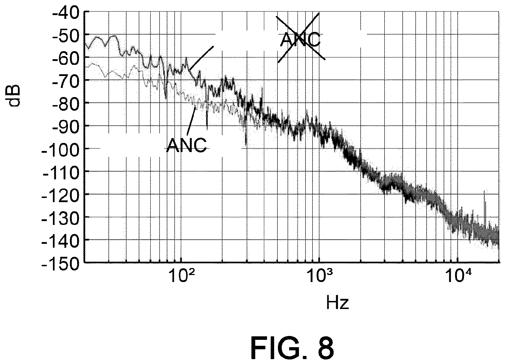

Comme on peut le voir sur la figure 8, le niveau de bruit dans la zone 8 est réduit par l'appui-tête 3 de 10 dB par rapport à un système d'annulation de bruit ordinaire, et pour des fréquences jusqu'à 400Hz.

La présente divulgation est limitée par les revendications annexées.

Notamment, dans l'exemple présenté, l'appui-tête 3 comporte exactement deux haut-parleurs 11a et 11b, trois capteurs de bruit 14a, 14b et 14c et deux microphones 17a et 17b, mais n'importe quel nombre de chacun des éléments précités suffit à réaliser la fonction décrite de l'appui-tête 3.

Notamment, dans l'exemple présenté, l'appui-tête 3 comporte des ailes latérales 5a et 5b montées mobiles sur la structure d'appui 5c, mais des ailes latérales 5a et 5b montées fixes sur la structure d'appui 5c suffiraient à réaliser la fonction décrite de l'appui-tête 3.

## Revendications

1. Appui-tête à annulation de bruit (3) pour siège de véhicule (1), comportant une partie centrale (5c) et deux parties latérales (5a, 5b) s'étendant de part et d'autre de la partie centrale (5c), l'appui tête (3) comportant au moins un haut-parleur (11a, 11b) orienté vers un espace destiné à recevoir la tête d'un utilisateur,
l'appui tête comportant en outre un microphone (17a, 17b) orienté vers ledit espace, dans lequel
dans lequel l'appui-tête comporte en outre un capteur de bruits (14a, 14b et 14c) orienté vers l'extérieur dudit espace,
l'appui-tête (3) comportant en outre un circuit de traitement de signal (18) configuré pour :
- recevoir un signal de bruit (20) depuis ledit capteur (14a, 14b et 14c), et déterminer une fonction de correction de bruit (W(z)) en tenant compte du signal de bruit,
- recevoir un signal d'erreur (23) depuis ledit microphone (17a, 17b), et mettre à jour la fonction de correction de bruit (W(z)), en tenant compte du signal d'erreur (23),
- générer un signal de correction de bruit, en appliquant la fonction de correction de bruit au signal de bruit (20),
**caractérisé en ce que**
- soit l'appui-tête comporte en outre une interface avec un module de lecture de sources audio externe à l'appui-tête, apte à émettre un signal audio vers le haut-parleur (11a, 11b),
- soit l'appui-tête comporte en outre un module de lecture de sources audio interne à l'appui-tête, apte à émettre un signal audio vers le haut-parleur (11a, 11b), et
dans lequel le circuit de traitement de signal (18) est en outre configuré pour :
- générer un signal de commande (25) à destination du haut-parleur (11a, 11b), en additionnant le signal de correction de bruit et le signal audio, de sorte à annuler le bruit.

2. Appui-tête selon la revendication 1, comportant en outre :
- un module vocal pour la téléphonie, apte à recevoir un signal vocal depuis le microphone (17a, 17b).

3. Appui-tête selon l'une quelconque des revendications 1 à 2, dans lequel la fonction de correction de bruit est une fonction du signal de bruit (20) en opposition de phase.

4. Appui-tête selon l'une quelconque des revendications 1 à 3, dans lequel le microphone (17a, 17b) est agencé dans une des deux parties latérales (5a, 5b).

5. Appui-tête selon la revendication 4, dans lequel le microphone (17a, 17b) est agencé dans une partie inférieure de ladite une des deux parties latérales (5a, 5b).

6. Appui-tête selon la revendication 4 ou 5, dans lequel le microphone (17a) est un premier microphone, et dans lequel un deuxième microphone (17b) est agencé dans l'autre des deux parties latérales.

7. Appui-tête selon la revendication 6, dans lequel le deuxième microphone (17b) est agencé de façon symétrique au premier microphone (17a).

8. Appui-tête selon l'une quelconque des revendications 1 à 7, dans lequel le haut-parleur (11a, 11b) est agencé dans une des deux parties latérales.

9. Appui-tête selon la revendication 8, dans lequel un deuxième haut-parleur (11b) est agencé dans l'autre des deux parties latérales et également apte à recevoir ledit signal audio et ledit signal de commande.

10. Appui-tête selon l'une quelconque des revendications 1 à 9, la partie centrale (5c) comportant ledit capteur de bruit (14c), et chacune des deux parties latérales (5a, 5b) comportant un autre capteur de bruit (14a, 14b), ledit signal de bruit (20) étant issus des trois capteurs de bruits.

11. Appui-tête selon la revendication 10, dans lequel chaque capteur de bruit (14a, 14b, 14c) est configuré pour recevoir du bruit et pour émettre un signal partiel de bruit (21a, 21b, 21c), le signal de bruit (20) étant une fonction des trois signaux partiels.

12. Appui-tête selon la revendication 11, dans lequel la fonction des trois signaux partiels (21a, 21b, 21c) est une moyenne pondérée des signaux partiels (21a, 21b, 21c), la pondération tenant compte d'un emplacement respectif de chaque capteur de bruit (14a, 14b, 14c).

13. Appui-tête selon l'une quelconque des revendications 1 à 12, dans lequel la partie centrale (5c) est une structure d'appui et les deux parties latérales (5a, 5b) sont des ailes latérales, de sorte à définir une zone d'annulation de bruit (8) entre lesdites ailes latérales, le signal de commande (25) à destination du haut-parleur (11a, 11b) permettant d'annuler le bruit dans ladite zone à annulation de bruit (8).

14. Appui-tête selon la revendication 13, dans lequel les ailes latérales (5a, 5b) sont montées mobiles sur la structure d'appui (5c).

15. Appui-tête selon la revendication 14, dans lequel les ailes latérales (5a, 5b) sont montées pivotantes sur la structure d'appui (5c).

16. Siège de véhicule (1) comprenant une assise, un dossier (2) et un appui-tête (3) selon l'une quelconque des revendications précédentes, monté sur le dossier (2).

## Patentansprüche

1. Geräuschdämpfende Kopfstütze (3) für einen Fahrzeugsitz (1), die einen Mittelteil (5c) und zwei Seitenteile (5a, 5b) umfasst, die sich beidseits des Mittelteils (5c) erstrecken, wobei die Kopfstütze (3) mindestens einen Lautsprecher (11a, 11b) umfasst, der auf einen Raum ausgerichtet ist, der zur Aufnahme des Kopfes eines Benutzers vorgesehen ist,
wobei die Kopfstütze ferner ein Mikrofon (17a, 17b) umfasst, das auf den Raum ausgerichtet ist,
wobei die Kopfstütze ferner einen Geräuschsensor (14a, 14b und 14c) umfasst, der nach außerhalb des Raums ausgerichtet ist,
wobei die Kopfstütze (3) ferner eine Signalverarbeitungsschaltung (18) umfasst, die konfiguriert ist zum:
- Empfangen eines Rauschsignals (20) von dem Sensor (14a, 14b und 14c) und Bestimmen einer Rauschkorrekturfunktion (W(z)) unter Berücksichtigung des Rauschsignals,
- Empfangen eines Fehlersignals (23) von dem Mikrofon (17a, 17b) und Aktualisieren der Rauschkorrekturfunktion (W(z)) unter Berücksichtigung des Fehlersignals (23),
- Erzeugen eines Rauschkorrektursignals durch Anwenden der Rauschkorrekturfunktion auf das Rauschsignal (20),
**dadurch gekennzeichnet, dass**
- entweder die Kopfstütze ferner eine Schnittstelle zu einem außerhalb der Kopfstütze angeordneten Audioquellen-Wiedergabemodul umfasst, das ein Audiosignal an den Lautsprecher (11a, 11b) übertragen kann,
- oder die Kopfstütze ferner ein Audioquellen-Wiedergabemodul umfasst, das sich innerhalb der Kopfstütze befindet und in der Lage ist, ein Audiosignal an den Lautsprecher (11a, 11b) zu übertragen, und
wobei die Signalverarbeitungsschaltung (18) ferner konfiguriert ist zum:
- Erzeugen eines für den Lautsprecher (11a, 11b) bestimmten Steuersignals (25) durch Addieren des Rauschkorrektursignals und des Audiosignals, um das Rauschen zu beseitigen.

2. Kopfstütze nach Anspruch 1, ferner umfassend:
- ein Sprachmodul für die Telefonie, das in der Lage ist, ein Sprachsignal vom Mikrofon (17a, 17b) zu empfangen.

3. Kopfstütze nach einem der Ansprüche 1 bis 2, wobei die Rauschkorrekturfunktion vom Rauschsignal (20) in Gegenphase abhängig ist.

4. Kopfstütze nach einem der Ansprüche 1 bis 3, wobei das Mikrofon (17a, 17b) in einem der beiden Seitenteile (5a, 5b) angeordnet ist.

5. Kopfstütze nach Anspruch 4, wobei das Mikrofon (17a, 17b) in einem unteren Teil eines der beiden Seitenteile (5a, 5b) angeordnet ist.

6. Kopfstütze nach Anspruch 4 oder 5, wobei das Mikrofon (17a) ein erstes Mikrofon ist, und wobei ein zweites Mikrofon (17b) im anderen der beiden Seitenteile angeordnet ist.

7. Kopfstütze nach Anspruch 6, wobei das zweite Mikrofon (17b) symmetrisch zum ersten Mikrofon (17a) angeordnet ist.

8. Kopfstütze nach einem der Ansprüche 1 bis 7, wobei der Lautsprecher (11a, 11b) in einem der beiden Seitenteile angeordnet ist.

9. Kopfstütze nach Anspruch 8, wobei im anderen der beiden Seitenteile ein zweiter Lautsprecher (11b) angeordnet ist, der ebenfalls das Audiosignal und das Steuersignal empfangen kann.

10. Kopfstütze nach einem der Ansprüche 1 bis 9, wobei der Mittelteil (5c) den Geräuschsensor (14c) umfasst und die beiden Seitenteile (5a, 5b) jeweils einen weiteren Geräuschsensor (14a, 14b) umfassen, wobei das Geräuschsignal (20) von den drei Geräuschsensoren stammt.

11. Kopfstütze nach Anspruch 10, wobei jeder Geräuschsensor (14a, 14b, 14c) konfiguriert ist, um Geräusche zu empfangen und ein Teilgeräuschsignal (21a, 21b, 21c) auszugeben, wobei das Geräuschsignal (20) von den drei Teilsignalen abhängig ist.

12. Kopfstütze nach Anspruch 11, wobei die Funktion der drei Teilsignale (21a, 21b, 21c) ein gewichteter Durchschnitt der Teilsignale (21a, 21b, 21c) ist, wobei die Gewichtung einen jeweiligen Ort jedes Geräuschsensors (14a, 14b, 14c) berücksichtigt.

13. Kopfstütze nach einem der Ansprüche 1 bis 12, wobei der Mittelteil (5c) eine Trägerstruktur ist und die beiden Seitenteile (5a, 5b) Seitenflügel sind, um zwischen den Seitenflügeln eine Geräuschunterdrückungszone (8) zu definieren, wobei das Steuersignal (25) an den Lautsprecher (11a, 11b) eine Geräuschunterdrückung in der Geräuschunterdrückungszone (8) ermöglicht.

14. Kopfstütze nach Anspruch 13, wobei die Seitenflügel (5a, 5b) beweglich an der Trägerstruktur (5c) gelagert sind.

15. Kopfstütze nach Anspruch 14, wobei die Seitenflügel (5a, 5b) schwenkbar an der Trägerstruktur (5c) montiert sind.

16. Fahrzeugsitz (1), umfassend eine Sitzfläche, eine Rückenlehne (2) und eine Kopfstütze (3) nach einem der vorstehenden Ansprüche, die auf der Rückenlehne (2) angebracht ist.

## Claims

1. A noise-canceling headrest (3) for a vehicle seat (1), comprising a central part (5c) and two side parts (5a, 5b) extending on both sides of the central part (5c), the headrest (3) comprising at least one loudspeaker (11a, 11b) oriented toward a space intended to receive the head of a user,
the headrest further comprising a microphone (17a, 17b) oriented toward said space, wherein
wherein the headrest further comprises a noise sensor (14a, 14b and 14c) oriented toward the outside of said space,
the headrest (3) further comprising a signal processing circuit (18) configured for:
- receiving a noise signal (20) from said sensor (14a, 14b and 14c), and determining a noise correction function (W(z)) by taking the noise signal into account,
- receiving an error signal (23) from said microphone (17a, 17b), and updating the noise correction function (W(z)) by taking the error signal (23) into account,
- generating a noise correction signal by applying the noise correction function to the noise signal (20),
**characterized in that**
- either the headrest further comprises an interface with an audio source playback module that is external to the headrest, capable of transmitting an audio signal to the loudspeaker (11a, 11b),
- or the headrest further comprises an audio source playback module that is internal to the headrest, capable of transmitting an audio signal to the loudspeaker (11a, 11b), and
wherein the signal processing circuit (18) is further configured to:
- generate a control signal (25) intended for the loudspeaker (11a, 11b), by adding together the noise correction signal and the audio signal so as to cancel the noise.

2. The headrest according to claim 1, further comprising:
- a voice module for telephony, capable of receiving a voice signal from the microphone (17a, 17b).

3. The headrest according to any one of claims 1 to 2, wherein the noise correction function is a function of the noise signal (20) in phase opposition.

4. The headrest according to any one of claims 1 to 3, wherein the microphone (17a, 17b) is arranged in one of the two side parts (5a, 5b).

5. The headrest according to claim 4, wherein the microphone (17a, 17b) is arranged in a lower part of said one of the two side parts (5a, 5b).

6. The headrest according to claim 4 or 5, wherein the microphone (17a) is a first microphone, and wherein a second microphone (17b) is arranged in the other of the two side parts.

7. The headrest according to claim 6, wherein the second microphone (17b) is arranged symmetrically with the first microphone (17a).

8. The headrest according to any one of claims 1 to 7, wherein the loudspeaker (11a, 11b) is arranged in one of the two side parts.

9. The headrest according to claim 8, wherein a second loudspeaker (11b) is arranged in the other of the two side parts and is also capable of receiving said audio signal and said control signal.

10. The headrest according to any one of claims 1 to 9, the central part (5c) comprising said noise sensor (14c) and each of the two side parts (5a, 5b) comprising another noise sensor (14a, 14b), said noise signal (20) coming from the three noise sensors.

11. The headrest according to claim 10, wherein each noise sensor (14a, 14b, 14c) is configured to receive noise and to emit a partial noise signal (21a, 21b, 21c), the noise signal (20) being a function of the three partial signals.

12. The headrest according to claim 11, wherein the function of the three partial signals (21a, 21b, 21c) is a weighted average of the partial signals (21a, 21b, 21c), the weighting taking into account a respective location of each noise sensor (14a, 14b, 14c).

13. The headrest according to any one of claims 1 to 12, wherein the central part (5c) is a support structure and the two side parts (5a, 5b) are side wings, so as to define a noise cancellation zone (8) between said side wings, the control signal (25) to the loudspeaker (11a, 11b) making it possible to cancel noise in the noise cancellation zone (8).

14. The headrest according to claim 13, wherein the side wings (5a, 5b) are movably mounted on the support structure (5c).

15. The headrest according to claim 14, wherein the side wings (5a, 5b) are pivotably mounted on the support structure (5c).

16. A vehicle seat (1) comprising a squab, a backrest (2), and a headrest (3) according to any one of the preceding claims, mounted on the backrest (2).
